# EUROPEAN PATENT APPLICATION

(11) **EP 3 922 458 A1**
(43) Date of publication of application: **15.12.2021**
(21) Application number: 20179034.2
(22) Date of filing: 09.06.2020
(51) Int. Cl.: B32B 27/30, B32B 27/36, B65D 65/40

(54) **MULTILAYERED PRODUCTS FOR FOOD PACKAGING**

(71) Applicant: Total Research & Technology Feluy, 7181 Seneffe (BE)
(72) Inventor: LHOST, Olivier, 7021 HAVRE (BE); FIORITO, Carmelo, 7140 Morlanwelz (BE); VAN BOCKSTAELE, Jerome, 59780 BAISIEUX (FR)
(74) Representative: Garcia Martin, Margarita

(57) **Abstract**

The disclosure concerns a packaging for food comprising a multilayered product with a multilayered structure comprising:
i. one or more layers A of a first polymer composition, wherein the first polymer composition comprises at least one biopolymer comprising or being a polylactic acid having a melt index ranging from 5.0 to 25.0 g/10 min; and
ii. one or more layers B of a second polymer composition, wherein the second polymer composition comprises polystyrene selected from general purpose polystyrene, modified-polystyrene and any mixture thereof;
wherein the total thickness of the one or more layers A of the first polymer composition is ranging from 5 to 25 % of the total thickness of the multilayered product, and the weight ratio of the second polymer composition to the first polymer composition is ranging from 95:5 to 80:20 as based on the total weight of the multilayered product.

## Description

### Technical Field

The disclosure relates to multilayered products such as sheets, films, plates and articles and to their use for food packaging. The disclosure also relates to the use of multilayered sheets or multilayered plates in the manufacture of articles for food packaging and to the multilayered articles thereof.

### Technical Background

Dairy packaging, for example, yoghurt thermoformed packaging, is produced from polystyrene. Thermoformed polystyrene articles are typically formed using a thermoforming process called "Form, Fill and Seal" (FFS), whereby the forming of the containers, the filing with a dairy product and the sealing of the container with a lid, are all performed on the same line. Polystyrene has the advantage that it is flexible enough so it can be easily thermoformed into cups and containers. At the same time, it maintains a certain rigidity, which allows multiple cups to be formed, attached to one another, whereby the multiple cups can be easily separated into individual cups by cracking the polystyrene. This material is suitable and appropriate for such use but finds its origin in non-renewable resources.

Other polymers are considered for thermoforming applications, for example, WO2017009409 describes a polypropylene composition suitable to produce thermoformed articles and articles made from this composition. The results obtained by the use of this composition are very good, but it remains requests to use biomaterials in the industry, i.e. articles coming from renewable resources and recyclable products.

Polylactic acid (PLA) is often mentioned as another interesting replacement material. PLA is a synthetic aliphatic polyester derived from renewable resources such as corn, sugar beet and cassava, which can ultimately be degraded under composting conditions. For example, WO2014202481 is related to a composition comprising a biopolymer such as polylactic acid (PLA), at least one-second polymer and at least one block copolymer of PLA and polybutadiene (PB). The second polymer can be selected from polybutadiene, high impact polystyrene and mixtures thereof. The described composition can be used in thermoforming applications. The use of PLA is interesting but not suitable for all applications, for example, PLA containers cannot be filled in a hot-fill line. Moreover, PLA is more expensive than polystyrene.

A known problem encountered with the production of articles intended to be used in the food industry is that they need to comply with specific requirements to be authorized as food contact substances. The food contact substances are defined to be any substance that is intended for use as a component material in manufacturing, packing, packaging, transporting or holding food. In Europe, Article 3 of Regulation (EC) No 1935/2004 stipulates the objective for materials and articles intended to come into contact with food: "Materials and articles (...) shall be manufactured in compliance with good manufacturing practice so that, under normal or foreseeable conditions of use, they do not transfer their constituents to food in quantities which could:
- endanger human health; or
- bring about an unacceptable change in the composition of the food; or
- bring about a deterioration of the organoleptic characteristics thereof".

For example, polystyrene is a food contact substance as far as the migration of styrene and ethylbenzene is kept under a defined threshold.

### Summary

It is, therefore, an object of the disclosure to add biomaterials or to increase the part of biomaterials in articles, such as the part of materials coming from renewable resources or from recycling. It is also an object of the disclosure to provide solutions to add or to increase, in articles, the part of material coming from renewable resources or from recycling, in the case said articles are articles suitable to come into contact with food. It is an object of the present disclosure to obtain articles wherein part of material coming from renewable sources which imply little or no adaptations of the production line within the production plant. It is also an object of the disclosure to provide articles for food packaging. It is an object of the disclosure to provide articles for food packaging that can be filled in a hot-fill line. It is an object of the disclosure to provide articles for food packaging that have acceptable sagging behaviour.

The present disclosure provides a solution to one or more of the aforementioned needs. Embodiments provide a solution to one or more of the said needs.

According to a first aspect, the disclosure provides a packaging for food comprising a multilayered product selected from a sheet, a plate, a film and an article, remarkable in that the multilayer product has a multilayered structure comprising:
i. one or more layers A of a first polymer composition, wherein the first polymer composition comprises at least one biopolymer comprising or being a polylactic acid (PLA) having a melt index ranging from 5.0 to 25.0 g/10 min as determined at 210 °C under a load of 2.16 kg according to ASTM D1238; and
ii. one or more layers B of a second polymer composition, wherein the second polymer composition comprises polystyrene (PS) selected from general purpose polystyrene (GPPS), modified-polystyrene and any mixture thereof, preferably the modified-polystyrene is high impact polystyrene (HIPS);
in that the total thickness of the one or more layers A of the first polymer composition is ranging from 5 to 25 % of the total thickness of the multilayered product, and in that the weight ratio of the second polymer composition to the first polymer composition in the multilayered product is ranging from 95:5 to 80:20 as based on the total weight of the multilayered product.

According to the disclosure, the second polymer composition is different from the first polymer composition.

With preference one or more of the following features can be used to better define the first polymer composition according to the disclosure:
- The first polymer composition of one or more layers A further comprises polystyrene (PS), being selected from general-purpose polystyrene (GPPS), modified-polystyrene and any mixture thereof, preferably the modified-polystyrene is high impact polystyrene (HIPS).
- The first polymer composition of one or more layers A further comprises at least one recycled polymer being recycled polyethylene terephthalate (rPET).
- The at least one biopolymer of the first polymer composition comprises polylactic acid (PLA) and one or more selected from poly-3-hydroxybutyrate (P3HB), polyhydroxyvalerate (PHV), polyhydroxyalkanoate (PHA), polyhydroxyhexanoate (PHH), polyhydroxyoctanoate (PHO) and their copolymers and any mixture thereof.
- The polylactic acid (PLA) is selected from poly-L-lactide acid (PLLA), poly-D-lactide acid (PDLA), copolymer of poly-L-lactide acid with D-lactide acid units, poly-L-lactide acid - poly-D-lactide acid (PLLA-PDLA) stereo complex and any mixture thereof, more preferably the polylactic acid (PLA) is selected from poly-L-lactide acid (PLLA), copolymer of poly-L-lactide acid with D-lactide acid units, and any mixture thereof.
- The polylactic acid (PLA) is a copolymer of poly-L-lactide acid with D-lactide acid units wherein the D-lactide acid units content is ranging from 0.1 to 15.0 wt.% as based on the total weight of the polylactic acid (PLA), preferably is ranging from 1.0 to 8.0 wt.%, more preferably is ranging from 3.0 to 6.0 wt.%, the D-lactide acid units content being determined using the enzymatic method.
- The polylactic acid (PLA) has a melt index ranging from 6.0 to 20.0 g/10 min, preferably ranging from 7.0 to 15.0 g/10 min, more preferably ranging from 8.0 to 12.0 g/10 min, as determined at 210 °C under a load of 2.16 kg according to ASTM D1238.

With preference, one or more of the following features can be used to better define the second polymer composition according to the disclosure:
- The second polymer composition of one or more layers B comprises or is high impact polystyrene (HIPS), preferably the second polymer composition of at least one of the layers B comprises a blend of high impact polystyrene and general purpose polystyrene wherein the content of high impact polystyrene is ranging from 30 to 70 wt.% as based on the total weight of the blend.
- The second polymer composition of one or more layers B is devoid of biopolymer selected from polylactic acid (PLA), poly-3-hydroxybutyrate (P3HB), polyhydroxyvalerate (PHV), polyhydroxyalkanoate (PHA), polyhydroxyhexanoate (PHH), polyhydroxyoctanoate (PHO) and their copolymers and any mixture thereof.
- The second polymer composition of one or more layers B is devoid of recycled polymer being recycled polyethylene terephthalate (rPET).
- The second polymer composition of one or more layers B is devoid of scraps from previously thermoformed articles.

With preference, one or more of the following features can be used to better define the multilayered product according to the disclosure:
- The multilayered product is a sheet or a plate for thermoforming, and the second polymer composition of one or more layers B has an MFI ranging from 1.0 to 10.0 g/10 min as determined according to ISO 1133-2011 at 200 °C under a load of 5 kg, preferably ranging from 2.0 to 8.0 g/10 min, even more preferably ranging from 2.0 to 6.0 g/10 min.
- The multilayered product is a sheet or a plate for thermoforming, and the second polymer composition of one or more layers B comprises or is high impact polystyrene (HIPS), wherein the high impact polystyrene is selected to have an elongation at break ranging from 40 to 80 % according to ISO 527-2, preferably from 50 to 70%.
- The multilayered product is a sheet or a plate for thermoforming, and the second polymer composition of one or more layers B comprises or is high impact polystyrene (HIPS), wherein the high impact polystyrene is selected to have a Vicat softening point 50N ranging from 80 to 100 °C according to 306B50, with a temperature increase of 50 °C/h.
- The multilayered product comprises two layers.
- The multilayered product comprises three layers or more.
- The multilayered product comprises three layers or more wherein two of the layers are surface layers, and at least one of the surface layers is a layer B of the second polymer composition.
- The multilayered product is a film, a plate or a sheet comprising two surface layers, preferably a sheet or a plate for thermoforming, wherein the layer intended to be in contact with food is a layer B of the second polymer composition; preferably the multilayered product comprises three layers or more and both surface layers are layer B of the second polymer composition.
- The multilayered product is an article comprising two layers or more wherein two layers are surface layers being an inner layer and an outer layer, wherein the inner layer is the one intended to be in contact with food, and is a layer B of the second polymer composition; preferably the multilayered product comprises three layers or more and both the inner and the outer layer are layer B of the second polymer composition.
- The total thickness of the one or more layers A of the first polymer composition is ranging from 5 to 20 % of the total thickness of the multilayered product, preferably from 5 to 15 %.
- The weight ratio of the second polymer composition to the first polymer composition in the multilayered product is ranging from 90:10 to 85:15 as based on the total weight of the multilayered product.

Such weight ratio ensures that the production line of the packaging according to the disclosure, which is classically used for obtaining products containing only polystyrene, needs little or no adaptations in order to respond to the processing needs of the added first polymer composition. The fact that the existing production line may still be used without inflicting significant changes has a significant impact on the production cost. Indeed, compared to the production of a pure PS sheet, the production of a product comprising layers A and B requires several slight procedure adaptations, all of which are reported to be possible in reasonable conditions, such as a slight change in temperature during thermoforming.

Surprisingly, it was found that a multilayered product having the said composition within this ratio shows less sagging.

According to a second aspect, the disclosure provides a thermoformable sheet or a thermoformable plate for the production of a packaging for food according to the first aspect; remarkable in that it comprises product has a multilayered structure comprising:
i. one or more layers A of a first polymer composition, wherein the first polymer composition comprises at least one biopolymer comprising or being a polylactic acid (PLA) having a melt index ranging from 5.0 to 25.0 g/10 min as determined at 210 °C under a load of 2.16 kg in accordance with ASTM D1238; and
ii. one or more layers B of a second polymer composition, wherein the second polymer composition comprises polystyrene (PS) selected from general purpose polystyrene (GPPS), modified-polystyrene and any mixture thereof, preferably the modified-polystyrene is high impact polystyrene (HIPS);
in that the total thickness of the one or more layers A of the first polymer composition is ranging from 5 to 25 % of the total thickness of the multilayered product, and in that the weight ratio of the second polymer composition to the first polymer composition in the multilayered product is ranging from 95:5 to 80:20 as based on the total weight of the multilayered product.

The first and second composition as well as the multilayered product can be defined according to the first aspect.

The disclosure also encompasses thermoformed articles produced from such a thermoformable sheet or from such a thermoformable plate.

According to a third aspect, the disclosure provides a process to produce a thermoformed article wherein the process comprises the steps of:
a. providing a thermoformable sheet or a thermoformable plate in accordance with the second aspect of the disclosure,
b. thermoforming the sheet or the plate into a thermoformed article.

According to a fourth aspect, the disclosure provides the use as packaging for food of a multilayered product selected from a sheet, a plate, a film and an article remarkable in that the multilayer product has a multilayered structure comprising:
i. one or more layers A of a first polymer composition, wherein the first polymer composition comprises at least one biopolymer comprising or being a polylactic acid (PLA) having a melt index ranging from 5.0 to 25.0 g/10 min as determined at 210 °C under a load of 2.16 kg in accordance with ASTM D1238; and
ii. one or more layers B of a second polymer composition, wherein the second polymer composition comprises polystyrene (PS) selected from general purpose polystyrene (GPPS), modified-polystyrene and any mixture thereof, preferably the modified-polystyrene is high impact polystyrene (HIPS);
in that the total thickness of the one or more layers A of the first polymer composition is ranging from 5 to 25 % of the total thickness of the multilayered product, and in that the weight ratio of the second polymer composition to the first polymer composition in the multilayered product is ranging from 95:5 to 80:20 as based on the total weight of the multilayered product.

The first and second composition as well as the multilayered product can be defined according to the first aspect.

According to a fifth aspect, the disclosure provides an article having a multilayered structure remarkable in that it comprises:
i. one or more layers A of a first polymer composition, wherein the first polymer composition comprises at least one biopolymer comprising or being a polylactic acid (PLA) having a melt index ranging from 5.0 to 25.0 g/10 min as determined at 210 °C under a load of 2.16 kg in accordance with ASTM D1238; and
ii. one or more layers B of a second polymer composition, wherein the second polymer composition comprises polystyrene (PS) selected from general purpose polystyrene (GPPS), modified-polystyrene and any mixture thereof, preferably the modified-polystyrene is high impact polystyrene (HIPS);
in that the total thickness of the one or more layers A of the first polymer composition is ranging from 5 to 25 % of the total thickness of the multilayered product;
in that the weight ratio of the second polymer composition to the first polymer composition in the multilayered product is ranging from 95:5 to 80:20 as based on the total weight of the multilayered product;
and in that the article is selected from a thermoformed article, an injection moulded article, a rotomoulded article, a blow moulded article and a film, preferably the film is selected from a blown film and a cast film.

The first and second compositions as well as the multilayered product can be defined according to the first aspect.

### Description of the figures

- Figure 1a represents a section of a PS-PLA sheet wherein the ratio PS/PLA is 100/0.
- Figure 1b represents a section of a PS-PLA sheet wherein the ratio PS/PLA is 90/10.
- Figure 1c represents a section of a PS-PLA sheet wherein the ratio PS/PLA is 85/15.
- Figure 1d represents a section of a PS-PLA sheet wherein the ratio PS/PLA is 80/20.
- Figure 2 is a graphic representing the force at the thermoforming awl related to the temperature for different PS and PS-PLA sheets.

### Detailed description of the disclosure

For the purpose of the disclosure the following definitions are given:
As used herein, a "polymer" is a polymeric compound prepared by polymerizing monomers, whether of the same or a different type. The generic term polymer thus embraces the term homopolymer, usually employed to refer to polymers prepared from only one type of monomer, and the terms copolymer and interpolymer as defined below.

As used herein, a "copolymer", "interpolymer" and like terms mean a polymer prepared by the polymerization of at least two different types of monomers. These generic terms include polymers prepared from two or more different types of monomers, e.g. terpolymers, tetrapolymers, etc.

As used herein, "blend", "polymer blend" and like terms refer to a composition of two or more compounds, typically two or more polymers. As used herein, "blend" and "polymer blend" also include "reactor blends," such as where a monomer is polymerized in the presence of a polymer. For example, the blend may initially be a blend of a first polymer and one or more monomers which are then polymerized to form a second polymer. A blend may or may not be miscible. A blend may or may not be phase separated.

As used herein, the terms "polylactic acid" or "polylactide" or "PLA" are used interchangeably and refer to poly(lactic acid) polymers comprising repeat units derived from lactic acid.

As used herein, "composition" and like terms mean sole component, or a mixture or blend of two or more components. The composition may include other components, polymeric or non-polymeric (e.g., additives), necessary or desirable to the end use of the composition.

The terms "comprising", "comprises" and "comprised of" as used herein are synonymous with "including", "includes" or "containing", "contains", and are inclusive or open-ended and do not exclude additional, non-recited members, elements or method steps. The terms "comprising", "comprises" and "comprised of" also include the term "consisting of".

The recitation of numerical ranges by endpoints includes all integer numbers and, where appropriate, fractions subsumed within that range (e.g. 1 to 5 can include 1, 2, 3, 4, 5 when referring to, for example, a number of elements, and can also include 1.5, 2, 2.75 and 3.80, when referring to, for example, measurements). The recitation of endpoints also includes the recited endpoint values themselves (e.g. from 1.0 to 5.0 includes both 1.0 and 5.0). Any numerical range recited herein is intended to include all sub-ranges subsumed therein.

The particular features, structures, characteristics or embodiments may be combined in any suitable manner, as would be apparent to a person skilled in the art from this disclosure, in one or more embodiments.

The disclosure provides a packaging for food comprising a multilayered product selected from a sheet, a plate, a film and an article remarkable in that the multilayer product has a multilayered structure comprising:
i. one or more layers A of a first polymer composition, wherein the first polymer composition comprises at least one biopolymer comprising or being a polylactic acid (PLA) having a melt index ranging from 5.0 to 25.0 g/10 min as determined at 210 °C under a load of 2.16 kg in accordance with ASTM D1238; and
ii. one or more layers B of a second polymer composition, wherein the second polymer composition comprises polystyrene (PS) selected from general purpose polystyrene (GPPS), modified-polystyrene and any mixture thereof, preferably the modified-polystyrene is high impact polystyrene (HIPS);
and in that the total thickness of the one or more layers A of the first polymer composition is ranging from 5 to 25 % of the total thickness of the multilayered product, and in that weight ratio of the second polymer composition to the first polymer composition in the multilayered product is ranging from 95:5 to 80:20 as based on the total weight of the multilayered product.

The present description refers to the multilayered product unless stated otherwise. The multilayered product of the disclosure encompasses films, sheets (preferably thermoformable sheets), plates (preferably thermoformable plates) and articles selected from thermoformed articles, injection moulded articles, rotomoulded articles, blow moulded articles and a film, preferably the film is selected from a blown film and a cast film. The description of the preferred embodiments for the multilayered product applies to all the films, sheets, plates or articles unless stated otherwise.

The weight ratio of the second polymer composition to the first polymer composition in the multilayered product is ranging from 95:5 to 80:00 as based on the total weight of the multilayered product, preferably from 90:10 to 85:15. Sagging may be diminished, or even avoided, when the weight ratio of the second polymer composition to the first polymer composition is within the above-mentioned ranges.

In a preferred embodiment, the multilayered product comprises only two layers: one layer A of the first polymer composition and one layer B of the second polymer composition. According to the disclosure, for food packaging, the layer intended to be in contact with the food is layer B of the second polymer composition.

In another preferred embodiment, the multilayered product comprises three layers or more. When only three layers are present, the multilayered product can comprise for example a multilayered structure of the type B-B-A, B-A-B or B-A-A. In accordance with the disclosure, at least one surface layer of the multilayered product is a layer B of the second polymer composition.

In an embodiment, the multilayered product is a film, a plate or a sheet comprising two surface layers, preferably a sheet or a plate for thermoforming, wherein the layer intended to be in contact with food is a layer B of the second polymer composition; preferably the multilayered product comprises three layers or more and both surface layers are layer B of the second polymer composition; i.e. the multilayered product can comprise for example a multilayred structure of the type B-A-B..

Preferably, the multilayered product is a thermoformable sheet or a thermoformable plate and the total thickness of the multilayered product (i.e. of the thermoformable sheet or plate) is ranging from 0.2 mm to 2.0 mm.

In another embodiment, the multilayered product is an article comprising two surface layers being an inner layer and an outer layer, wherein the inner layer is the one intended to be in contact with food, and wherein the inner layer is a layer B of the second polymer composition; preferably the multilayered product comprises three layers or more and both the inner and the outer layer are layers B of the second polymer composition.

With preference, the total thickness of the one or more layers A of the first polymer composition is ranging from 5 to 25 % of the total thickness of the multilayered product, preferably from 5 to 15 %.

### The one or more layers B of the second polymer composition

In accordance with the disclosure, the multilayered product comprises one or more layers B of a second polymer composition, wherein the second polymer composition comprises polystyrene (PS) selected from general purpose polystyrene (GPPS), modified polystyrene, high impact polystyrene (HIPS) and any mixture thereof.

In the modified-polystyrene, part of the styrene may be replaced by unsaturated monomers copolymerizable with styrene, for example, alpha- methylstyrene or (meth)acrylates. Other examples which may be mentioned are chloropolystyrene, poly-alpha-methylstyrene, styrene-chlorostyrene copolymers, styrene-propylene copolymers, styrenebutadiene copolymers, styrene-isoprene copolymers, styrene-vinyl chloride copolymers, styrene-vinyl acetate copolymers, styrene-alkyl acrylate copolymers (methyl, ethyl, butyl, octyl, phenyl acrylate), styrene-alkyl methacrylate copolymers (methyl, ethyl, butyl, phenyl methacrylate), styrene methyl chloroacrylate copolymers and styrene-acrylonitrile-alkyl acrylate copolymers.

The polystyrenes used in the present disclosure may be co- or homopolymers of styrene, alpha methyl styrene and para methyl styrene. Preferably the polystyrene is homopolystyrene.

The polystyrenes may be prepared by a number of methods well-known to the person skilled in the art and commercially available.

The modified-polystyrene may be rubber modified. The rubber may be prepared by a number of methods, preferably by emulsion or solution polymerization. These processes are well-known to those skilled in the art. If present, preferably the rubber is present in an amount from about 3 to 15 wt.% based on the total weight of the modified-polystyrene. Polybutadiene is a particularly useful rubber. Preferably the modified-polystyrene is rubber modified polystyrene. In an embodiment, the rubber-modified polystyrene is a High Impact Polystyrene (HIPS). The process for making HIPS are well-known to those skilled in the art. For example, the process may comprise polymerizing styrene monomer in the presence of dissolved rubber. Polymerization of styrene, and optionally a comonomer, may be initiated by heating and/or by an initiator, by way of example a radical initiator. The rubber may be "dissolved" in the styrene monomer. The usual rubber types utilized in the manufacture of HIPS include polybutadiene (PB), styrene-butadiene rubber (SBR), and styrene-butadiene-styrene rubber (SBS). Polystyrene may be initially formed from the styrene monomer within the homogeneous rubber solution in styrene. In HIPS, a part of the styrene may be replaced by unsaturated monomers copolymerizable with styrenes such as other monovinylaromatic monomers, alkyl esters of acrylic or methacrylic acid and acrylonitrile. Non-limiting examples of suitable processes for preparing HIPS are described in US2010/240832, incorporated herein by reference.

In a preferred embodiment, the second composition of one or more layers B of polystyrene (PS) comprises or is high impact polystyrene (HIPS),
- If layer B consists HIPS, the HIPS is selected to have an MFI ranging from 1.0 to 10.0 g/10 min as determined according to ISO 1133-2011 at 200 °C under a load of 5 kg, preferably ranging from 2.0 to 8.0 g/10 min, even more preferably ranging from 2.0 to 6.0 g/10 min.
- If the layer B is a blend of HIPS and GPPS (this option is often considered to reduce the final cost despite the reduction of impact properties), then:
   ∘ The HIPS polymer has an MFI ranging from 1.0 to 15.0 g/10 min as determined according to ISO 1133-2011 at 200 °C under a load of 5 kg, preferably ranging from 4.0 to 15.0 g/10 min, even more preferably ranging from 4.0 to 12.0 g/10 min; and/or
   ∘ The HIPS polymer content is ranging from 30 wt.% to 70 wt.% based on the total weight of the blend; and/or
   ∘ The GPPShas a MFI ranging from 1.0 to 20.0 g/10 min as determined according to ISO 1133-2011 at 200 °C under a load of 5 kg, preferably ranging from 2.0 to 12.0 g/10 min; and/or
   ∘ The GPPS polymer content is ranging from 70 wt.% to 30 wt.% based on the total weight of the blend.

In a preferred embodiment, the multilayered product is a thermoformable sheet or a thermoformable plate and the following applies.

For example, the second polymer composition of one or more layers B has an MFI ranging from 1.0 to 10.0 g/10 min as determined according to ISO 1133-2011 at 200 °C under a load of 5 kg, preferably ranging from 2.0 to 8.0 g/10 min. In particular, when one or more layers B of the second polymer composition comprises or is high impact polystyrene (HIPS), the HIPS has a MFI ranging from 1.0 to 10.0 g/10 min as determined according to ISO 1133-2011 at 200 °C under a load of 5 kg, preferably ranging from 2.0 to 8.0 g/10 min.

With preference, the high impact polystyrene is selected to have an elongation at break ranging from 40 to 80 % according to ISO 527-2, preferably from 50 to 70%.

More preferably, the high impact polystyrene is selected to have a Vicat softening point at 50N ranging from 80 to 100 °C according to 306B50, with a temperature increase of 50 °C/h.

Examples of suitable HIPS that can be used in accordance with the disclosure are polystyrene impact 7240 and polystyrene impact 8260, commercially available from TOTAL^{®}.

More preferably, the second polymer composition of one or more layers B comprises or is high impact polystyrene (HIPS), preferably the second polymer composition of one or more of the layers B comprises a blend of high impact polystyrene and general purpose polystyrene wherein the content of high impact polystyrene is ranging from 30 to 70 wt.% as based on the total weight of the blend; and/or the GPPS has a MFI ranging from 1.0 to 20.0 g/10 min as determined according to ISO 1133-2011 at 200 °C under a load of 5 kg, preferably ranging from 2.0 to 15.0 g/10 min.

Examples of suitable GPPS that can be used in accordance with the disclosure are polystyrene crystal 1340 and polystyrene crystal 1540, commercially available from TOTAL^{®}.

It is to be noted that the second polymer composition is different from the first polymer composition. In particular, the second polymer composition of one or more layers B is devoid of:
- biopolymer selected from polylactic acid (PLA), poly-3-hydroxybutyrate (P3HB), polyhydroxyvalerate (PHV), polyhydroxyalkanoate (PHA), polyhydroxyhexanoate (PHH), polyhydroxyoctanoate (PHO) and their copolymers and any mixture thereof, and/or
- recycled polymer being recycled polyethylene therephtalate (rPET).

### The one or more layers A of the first polymer composition

In accordance with the disclosure, the multilayered structure comprises one or more layers A of a first polymer composition, wherein the first polymer composition comprises at least one biopolymer comprising or being a polylactic acid (PLA) having a melt index ranging from 5.0 to 25.0 g/10 min as determined at 210 °C under a load of 2.16 kg in accordance with ASTM D1238.

In an embodiment of the disclosure, the at least one biopolymer comprises polylactic acid (PLA), and one or more selected from poly-3-hydroxybutyrate (P3HB), polyhydroxyvalerate (PHV), polyhydroxyalkanoate (PHA), polyhydroxyhexanoate (PHH), polyhydroxyoctanoate (PHO) and their copolymers and any mixture thereof. With preference the at least one biopolymer is a mixture of polylactic acid (PLA) and polyhydroxyalkanoate (PHA).

In another embodiment that may be combined or alternative to the presence of more than one biopolymer, the first polymer composition of one or more layers A further comprises at least one recycled polymer being recycled polyethylene terephthalate (rPET).

The at least one biopolymer suitable for the disclosure is a polymer made by a natural or synthetic route from renewable resources. By way of example any polymer made by a natural or synthetic route from renewable resources and belonging to polyhydroxy acids or polyhydroxyalkanoates and their copolymers can be considered, provided they contain per addition unit at least one labile hydrogen atom bonded to a carbon atom in the α-position of an oxygen atom and/or a carbonyl group.

More preferably, the polylactic acid (PLA) is selected from poly-L-lactide acid (PLLA), poly-D-lactide acid (PDLA), copolymer of poly-L-lactide acid with D-lactide acid units, PLLA-PDLA stereo complex and any mixture thereof, more preferably the polylactic acid (PLA) is selected from poly-L-lactide acid (PLLA), copolymer of poly-L-lactide acid with D-lactide acid units, and any mixture thereof.

Polylactic acids suitable for the composition can be prepared according to any method known in the state of the art. The polylactic acids can be prepared by ring-opening polymerization of raw materials having required structures selected from lactide, which is a cyclic dimer of lactic acid, glycolide, which is a cyclic dimer of glycolic acid, and caprolactone and the like. Lactide acid includes L-lactide acid, which is a cyclic dimer of L-lactic acid, D-lactide acid, which is a cyclic dimer of D-lactic acid, meso-lactide acid, which is a cyclic dimer of D-lactic acid and L-lactic acid, and DL-lactide acid, which is a racemate of D-lactide acid and L-lactide acid. PLLA-PDLA complexes are described for example in WO2010097463. The PLA used in the present composition can be derived from L-lactic acid, D-lactic acid, meso-lactide acid, or a mixture thereof. A mixture of two or more polylactic acid polymers can be used.

The polylactide acid suitable for the composition can be amorphous polylactide acid. As used herein, the term "amorphous" refers to a solid that is non-crystalline and lacks the long-range order characteristics of a crystal. For polylactide acid, the polymerization of a racemic mixture of L- and D-lactide acids usually leads to the synthesis of poly-DL-lactide acid that is amorphous. When non-racemic mixtures are being polymerized, the degree of crystallinity of the resulting polymer may be controlled by the ratio of D to L enantiomers used and/or the type of catalyst used during the polymerization reaction.

Most commercially available PLA have higher L-lactic acid content. When the D-lactic acid content increases, the degree of crystallinity, melting temperature, crystallization rate all decrease. PLA will show very little tendency to crystallize when the content of D-lactic acid exceeds 15 mol%. The PLA for the current disclosure preferably has an L-lactic acid content in the range of 85 mol % to 100 mol %. Examples of such PLA materials are 2500HP, 4032D, 2003D, 4043D, 4060D and 700 ID from NatureWorks LLC.

In an embodiment, the polylactic acid is a semi-crystalline polylactic acid exhibiting a D-lactic acid stereoisomer content ranging from 0 to 15 wt. % as based on the total weight of the polylactic acid, preferably ranging from 1 to 8 wt.%, more preferably ranging from 3 to 6 wt.%, the D-lactic acid stereoisomer content being determined using the enzymatic method.

Polylactic acid for use in the present composition can be prepared according to any known method such as the process described in documents WO1998/002480, WO 2010/081887, FR2843390, US5053522, US 5053485 or US5117008.

In an embodiment, the polylactic acid has a density of at least 1.228 g/cm³ (= g/cc), for example of at least 1.230 g/cm³, for example of at least 1.232 g/cm³, for example of at least 1.235 g/cm³, as determined in accordance with ASTM D1505. In an embodiment, the polylactic acid has a density of at most 1.255 g/cm³, for example of at most 1.250 g/cm³, for example of at most 1.248 g/cm³, for example of at most 1.245 g/cm³, as determined in accordance with ASTM D1505.

In an embodiment, the polylactic acid has a density of from about 1.228 g/cm³ to about 1.255 g/cm³, for example from about 1.230 g/cm³ to about 1.250 g/cm³, for example from about 1.232 g/cm³ to about 1.248 g/cm³, for example from about 1.235 g/cm³ to about 1.245 g/cm³, as determined in accordance with ASTM D1505.

In an embodiment, the polylactic acid has a melt index MI₂ of at least 5.0 g/10 min, preferably at least 6.0 g/10 min, more preferably of at least 7.0 g/10 min, even more preferably of at least 8.0 g/10 min as determined at 210 °C under a 2.16 kg load in accordance with ASTM D1238.

In an embodiment, the polylactic acid has a melt index MI₂ of at most 25.0 g/10 min, preferably of at most 20.0 g/10 min, more preferably of at most 15.0 g/10 min, and even more preferably of at most 12.0 g/10 min as determined at 210 °C under a 2.16 kg load in accordance with ASTM D1238.

In an embodiment, the polylactic acid may exhibit a crystalline melt temperature (Tc) of from 140 °C to 190 °C, for example from 145 °C to 185 °C, as determined in accordance with ASTM D3418.

In an embodiment, the polylactic acid may exhibit a glass transition temperature of from 50 °C to 70 °C, for example from 55 °C to 55 °C, as determined in accordance with ASTM D3418.

In an embodiment, one or more layers A comprise a first polymer composition comprising recycled material, wherein said recycled material is recycled polyethylene terephthalate (rPET).

In an embodiment, one or more layers A comprise a first polymer composition comprising recycled material, wherein said recycled material corresponds to scraps from previously thermoformed articles.

In an embodiment the recycled material is provided as a separate additional layer C. In such case, introduction of the scraps in an intermediate layer between the PLA layer and the PS layer is the preferred structure.

In an embodiment of the disclosure, one or more layers A comprise a first polymer composition, wherein the first polymer composition comprises:
a. polystyrene selected from general purpose polystyrene (GPPS), modified-polystyrene and any mixture thereof, preferably the modified-polystyrene is high impact polystyrene (HIPS), and
b. at least one biopolymer comprising polylactic acid (PLA),
c. optionally one or more further biopolymers selected from poly-3-hydroxybutyrate (P3HB), polyhydroxyvalerate (PHV), polyhydroxyalkanoate (PHA), polyhydroxyhexanoate (PHH), polyhydroxyoctanoate (PHO) and their copolymers and any mixture thereof;
d. optionally at least one recycled polymer being recycled polyethylene terephthalate (rPET).

In a preferred embodiment, the multilayered product further comprises one or more layers C comprising a third polymer composition being or comprising a recycled material, wherein said recycled material being recycled polyethylene terephthalate (rPET). The said one or more layers C may be an intermediate layer between two layers A or between two layers B or between a layer A and a layer B.

### The process to prepare a thermoformed article from the multilayered product according to the disclosure

The disclosure also relates to a process to produce a thermoformed article wherein the process comprises the steps of:
a. providing a thermoformable sheet or a thermoformable plate having a multilayered structure as described above, and
b. thermoforming the sheet or the plate into a thermoformed article.

Thermoformed articles can be generally produced by a two-stage process, wherein in the first stage a sheet or a plate is produced by melt-extruding a polymer (melt-extrusion stage), and wherein in the second stage said sheet or said plate is shaped (thermoforming stage). The two stages may either directly follow each other (in-line thermoforming) or they may not directly follow each other, in which case the produced sheet or the produced plate is first stored for some time (e.g. a few hours, days or months) and only later fed to the thermoforming stage.

The thermoformable sheet or the thermoformable plate provided in step a) of the process for preparing an article may be produced on any melt co-extrusion sheet line or plate line, the sheet or plate production process, for example, comprising the steps of:
(1) providing a first polymer composition comprising one or more polymers selected from biopolymers and optional recycled polymers and a second polymer composition comprising polystyrene or a mixture of two or more polystyrene;
(2) separately melting the first and second polymer compositions in a separate extruder to obtain a molten first polymer composition and a molten second polymer composition;
(3) co-extruding the molten first polymer composition and the molten second polymer obtained in step (2) through a respective slit die to form a multilayer extrudate; and
(4) cooling the multilayer extrudate to obtain a sheet or a plate.

The disclosure also encompasses an extruded sheet or plate formed from the co-extruded multi-layered structure as defined above.

The sheet or plate obtained in step (4) of the production process is preferably obtained by extrusion throughflat dies with cooling calender before being wound into a coil. The thickness distribution of the sheet or plate is preferably controlled during production. In a preferred embodiment, the chill-roll temperature is ranging from 40 to 60 °C.

When a PS sheet is produced, the chill roll temperature is usually imposed at 70 - 80 ° C in order to provide enough cooling time to PS. However, if such a temperature is imposed during the production of a PS-PLA coextruded sheet, sticking of PLA is observed. To avoid such issue, the temperature was lowered as mentioned above.

The extrusion conditions are preferably optimized to avoid excessive shrinkage and allow distribution of uniform thickness. In some preferred embodiments, the sheet or plate formed in step (b) of the process for preparing an article, or step (4) of the production process, has a thickness of at least 0.2 mm and at most 6.0 mm.

Step (b) of the process for preparing an article comprises thermoforming the sheet or the plate into an article. Thermoforming is one of the major methods of processing thermoplastic polymers to achieve, from calendered or extruded sheets or plates, objects of widely varying thicknesses and very high production rate dimensions. The thermoforming step (b) of the process for preparing an article can be performed on any thermoforming machine comprising a heating and a forming section.

In some preferred embodiments, the thermoforming stage (b) of the process for preparing an article comprises a first heating step, whereby the sheet or plate is heated to a temperature allowing its shaping. In some preferred embodiments, the thermoforming stage (b) of the process for preparing an article comprises a second shaping step, whereby the heated sheet or plate is shaped into a mould. In some preferred embodiments, the thermoforming stage (b) of the process for preparing an article comprises a third cooling step, after which the desired object is obtained. Preferably, the thermoforming stage (b) comprises a first heating step, a second shaping step, and a third cooling step.

Preferably, the thermoforming stage (b) of the process for preparing an article comprises the steps of:
(5) draping the sheet or the plate, preferably which is at a temperature at which it is soft, over or into a mould, thus obtaining a formed sheet or plate;
(6) cooling the formed sheet or plate to a temperature at which it maintains its shape; and
(7) removing the thermoformed sheet or plate from the mould.

Optionally, the thermoforming stage (b) of the process for preparing an article may further comprise a step of warming the sheet or plate to a temperature at which it is soft before it is draped. Such an optional step of warming the sheet may particularly be required when sheet or plate production and thermoforming are done "off-line", i.e. not in series, and/or the sheet or the plate is stored for some time to allow it to cool to a temperature below the temperature at which it can be draped. Thus, the thermoforming stage of the process for preparing an article may comprise a step of:
(4a) warming the sheet or the plate obtained in step (4) of the production process to a temperature at which it is soft, to obtain a soft sheet or plate, which is then used in the draping step (5).

The present disclosure encompasses thermoforming of packaging, such as containers. The process can be done using in-line thermoforming, which is a processing technology whereby a thermoforming unit is placed right behind an extrusion line, to turn polymer pellets into a finished product in one operation.

The process can be done using a Form-Fill-and-Seal (FFS) line comprising an unwinding station which feeds a standard thermoforming station: heaters raise the temperature of a sheet or plate so that it can be formed with the aid of a punch, for example into the shape of one or more containers. These sheets or plates have been previously prepared. The containers may then advance to a filling station which discharges the product into the containers. A lid may subsequently be provided over the containers to seal them. The containers may then be cut into 8 groups of 4 or individual portions fastened together. This type of thermoforming packaging allows the realization of a multipack. The advantage of this route is that the containers do not need to be sterilized as they are filled in a controlled environment to ensure the sterility of the entire environment.

In some preferred embodiments, stage (b) of the process for preparing an article is performed in an FFS line.

Optionally, the thermoforming stage (b) of the process for preparing an article may comprise a trimming step. Trimming is usually defined as the process of mechanical breaking the thermoformed sheet or plate into two pieces, one of which is the desired thermoformed article, the other being the edge trim. Thus, the process as defined optionally comprises the step of (8) trimming the thermoformed sheet or plate obtained in step (7) to obtain a thermoformed article.

The present application also encompasses the use of a multilayered structure as defined herein in the production of a sheet, a plate or thermoformed article.

The following examples serve to merely illustrate the disclosure and should not be construed as limiting its scope in any way. While the disclosure has been shown in only some of its forms, it should be apparent to those skilled in the art that it is not so limited, but is susceptible to various changes and modifications without departing from the scope of the disclosure.

### EXAMPLES

### Test methods

The melt index (MI5) of the polystyrene is measured according to ISO 1133-2011 at 200 °C under a load of 5 kg.

The melt index (MI2) of the polylactic acid is measured in accordance with ASTM D1238 at 210 °C under a load of 2.16 kg.

The elongation at break of the polystyrene is determined in accordance with ISO 527-2.

Vicat Softening temperature B50 was measured according to ISO 306 at a heating rate of 50 °C/hour and under a load of 50 N.

The content of D-lactide acids is determined using the enzymatic method described in US2011/0319588 which is incorporated by reference.

The stereochemical purity of the poly-L-lactic acid or of the poly-D-lactic acid was determined from the respective content of L-mer and D-mer. The enzymatic method described in US2011/0319588 was used for this determination.

The lactides are dimers. Enzymatic analysis makes it possible to measure all of the monomer of one of the two forms of optically active enantiomers present in the dimer, for example the content of D-mer or L-mer in the lactide in order to check its purity. This analysis can also be performed on PL-LA and PD-LA after polymerization. One unit of L-LA in PL-LA will give 100% of L-mer and one unit of D-LA in PD-LA will give 100% of D-mer. One unit of meso-LA will give 50% of D-mer and 50% of L-mer. Therefore, during racemization of L-LA or of D-LA, one meso-LA equivalent will be present.

The lactide can be represented by the following 2 chiral forms:

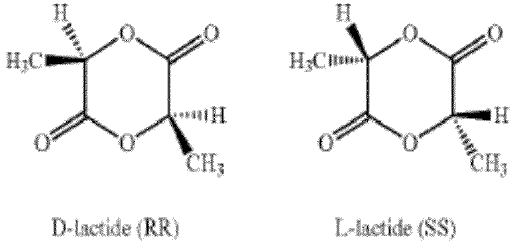

The meso-lactide (non-chiral) can be represented as follows:

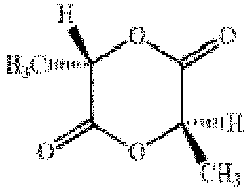

The stereochemical purity of the poly-L-lactic acid or of the poly-D-lactic acid of the disclosure was determined from the respective content of L-mer or of D-mer.

The principle of the enzymatic method described in US2011/0319588 is as follows:
The L-lactate and D-lactate ions are oxidized to pyruvate respectively by the enzymes L-lactate dehydrogenase and D-lactate dehydrogenase using nicotinamide-adenine dinucleotide (NAD) as coenzyme. To force the reaction in the direction of formation of pyruvate, it is necessary to trap this compound by reaction with hydrazine. The increase in optical density at 340 nm is proportional to the amount of L-lactate or of D-lactate present in the sample.

The samples of polylactic acid were prepared by mixing 25 ml of sodium hydroxide (1 mol/L) with 0.6 g of PLA. The solution was boiled for 8 h and then cooled. The solution was then adjusted to neutral pH by adding hydrochloric acid (1 mol/L), then deionized water was added in a sufficient amount to give 200 ml.

The samples were then analysed on a Vital Scientific Selectra Junior analyser using, for L-mer determination of poly-L-lactide acid, the box titled "L-lactic acid 5260" marketed by the company Scil and for D-mer determination of poly-D-lactide acid, the box titled "L-lactic acid 5240" marketed by the company Scil. During the analysis, a reactive blank and calibration using the calibrant "Scil 5460" are used.

Determination of the optical or isomeric purity of the lactide is carried out by the same enzymatic method. Only the sample preparation is different. The samples of lactide were prepared by mixing 25 ml of sodium hydroxide (1 mol/L) with 0.6 g of lactide. The solution was mixed and then left at rest for half an hour before being adjusted to neutral pH by adding hydrochloric acid (1 mol/L), then deionized water was added in a sufficient amount to give 200 ml.

The density of the polylactic acid is determined in accordance with ASTM D1505.

The crystalline melt temperature and the glass transition temperature of the PLA are determined in accordance with ASTM 3418.

The sagging was characterized by comparison of the sheets sag, in the thermoforming temperature window. This was quantified in two different ways wherein a comparison between the behaviour of different samples was made, allowing to establish a ranking in terms of sagging :
- The pressure (or the force as the surface is constant) needed to thermoformed the sheet is recorded in the range of the thermoforming temperature window. The lower is the pressure, the lower is the viscosity of the sheet is low and thus the more important is the sagging effect;
- The stroke of the jack is measured when it touches the sheet. The higher is the distance from the punch, the lower is the sagging.

### Examples

The following examples illustrate the disclosure.

### Example 1: production of coextruded PS-PLA sheets

Several coextruded PS-PLA bilayers sheets have been produced.

The HIPS is the commercial grade 7240 from TOTAL^{®} wherein the MI5 is 4.5 g/10 min as determined according to ISO1133-2011 at 200 °C under a load of 5 kg.

The PLA is the commercial grade 4060D from Nature Works LLC, with a density of 1.24 g/cm³ as determined according to ASTM D1505, and a glass transition temperature of 55-60°C as determined according to ASTM D3418. The MI2 of PLA 4060D is 10 g/10 min as determined according to ASTM D1238 at 210°C under a load of 2.16 kg.

The sheets were of about 1 mm of thickness, and the relative PS-PLA (i.e. second polymer composition - first polymer composition) content was 100-0, 95-5, 90-10, 85-15, 80-20 (targeted ratios) and a last one produced after imposition of the maximum throughput of PLA. In this latter case, the PS and PLA thickness repartition was roughly the same as the one obtained when targeting the 80-20 ratio. In fact, the additional PLA content was located near the edges, inducing, in this area, wide transparent layers.

During production, the chill roll temperature was about 50 °C.

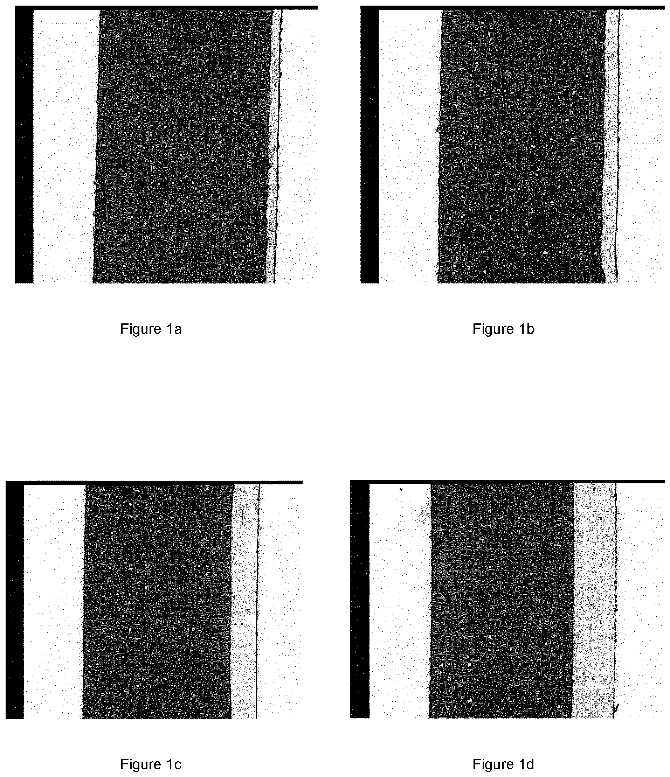

The figures 1a to 1d show the analysis of the thickness repartition in coextruded PS-PLA sheets (the PS layers appear in black and the PLA layer is in grey).

### Example 2: Thermoforming of the co-extruded sheets

The PS-PLA sheets produced in example 1 were thermoformed and compared with the thermoforming behaviour of pure PS (HIPS 7240) sheets.

Observations performed during these tests are:
Regarding most processing parameters, thermoforming of PS-PLA sheets was roughly similar to the ones of pure PS sheet: from a process point of view, the replacement of pure PS sheet with PS-PLA sheets may globally be considered as "drop-in": no required significant temperature change.

Regarding the heating process, PLA induces a significant improvement in terms of sagging as a sag reduction was observed when PLA is present. As this observation is performed in an ALM equipment, so with "A4" samples (18 cm width), there is no doubt on an observable significant effect in industrial (larger) thermoforming lines.

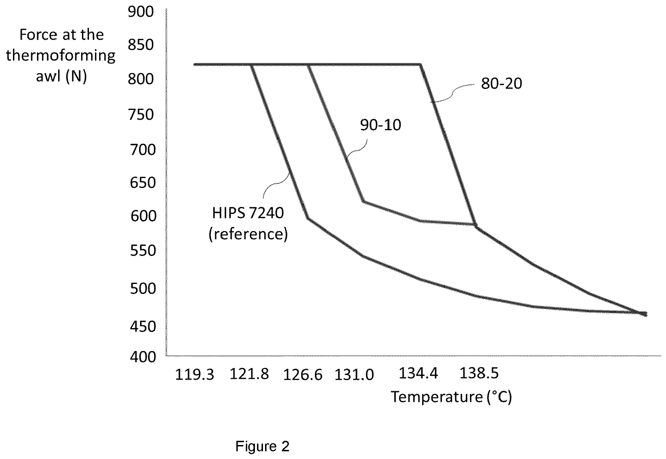

The force measured on the thermoforming punch is higher when processing PS-PLA sheets than with pure PS sheet (see Figure 2).

### Thickness repartition after thermoforming

Table 1 displays the thicknesses of PS and PLA layers in the PS-PLA sheets and thermoformed articles.

**Table 1: Thickness of the PS and PLA layers**

| Sample | Co-extruded sheet | | Thermoformed cup | | | |
|---|---|---|---|---|---|---|
| | | | Upper part | | Bottom part, in the corner | |
| | PS | PLA | PS | PLA | PS | PLA |
| 95-5 | 0.949 mm (94.5 %) | 0.056 mm (5.5 %) | 0.23 mm (94.7 %) | 0.013 mm (5.3 %) | 0.25 mm (95.1 %) | 0.013 mm (4.9 %) |
| 90-10 | 0.912 mm (93.0 %) | 0.069 mm (7.0 %) | 0.26 mm (92.2 %) | 0.022 mm (7.8 %) | 0.26 mm (94.2 %) | 0.016 mm (5.8 %) |
| 85-15 | 0.838 mm (85.2 %) | 0.145 mm (14.8%) | 0.34 mm (90.2%) | 0.037 mm (9.8%) | 0.23 mm (87.1 %) | 0.034 mm (12.9%) |
| 80-20 | 0.767 mm (77.4%) | 0.224 mm (22.6 %) | 0.30 mm (83.1 %) | 0.061 mm (16.9 %) | 0.20 mm (81.0%) | 0.047 mm (19.0 %) |

Similarities between the relative proportion in PS and PLA before and after the thermoforming process are considered as the proof that adhesion between PS and PLA is kept during the sheet transformation.

From the results, it can be seen that no significant polymer thickness repartition change has been observed even after thermoforming. This demonstrates that adhesion between PS and PLA is kept during the sheet transformation.

### Example 3

### Description of the samples and experiments

The specific migrations of styrene and ethylbenzene have been studied. Specific migration analyses have been performed in the Fraunhofer IVV laboratory (Freising, Germany) considering the European Standard EN 1186-5.

In the evaluations performed, 1 mm-thick plates identical to the ones studied in example 1, have been considered. Monolayer sheets of polystyrene (used as references) and bilayer sheets of polystyrene and PLA have been put in contact with stimulants during 10 days at 40 °C. For the bilayer structures, the PLA layer was put into contact with stimulant. For "fermented milk such as yoghurt, buttermilk and similar products", two food stimulants must be considered: ethanol 50 % (v/v) and acetic acid 3 % (v/v).

Ten "A4" sized sheets per sample were analyzed. The migration tests were carried out in triplicate.

Quantification of the styrene and ethylbenzene migration in the food stimulant were performed using a Fraunhofer IVV internal method: after dilution of the migration solutions to a concentration of 10 % ethanol (v/v), the content of styrene and ethylbenzene is measured by gas chromatography/mass spectroscopy (m/z = 104 for styrene; m/z = 91 for ethylbenzene) and use of a preliminary calibration.

### Determination of specific migration of styrene and ethylbenzene

Among the sheets described above, four compositions were selected for the analysis: those with a relative PS-PLA content of 100-0 (reference), 90-10, 80-20 and the sheet produced with the maximum PLA throughput.

PLA crystallization is known to be highly sensitive to the cooling conditions. As sheets have been produced imposing 50 °C as chill-roll temperature, most of the PLA (if not all) must be amorphous. To consider another PLA crystallization level, several 80-20 samples have been annealed for 48 hours at 80 °C in an oven. For comparison, the same crystallization procedure has been imposed on pure sheets to obtain a "migration reference" in such conditions.

Migration results are presented in table 2.

**Table 2: Results of the specific migration tests.**

| | Sample description | Food stimulant: 3 % acetic acid | | | | Food stimulant: 50 % ethanol | | | |
|---|---|---|---|---|---|---|---|---|---|
| | | styrene | | ethyl benzene | | styrene | | ethyl benzene | |
| | | Area related migration (mg/dm²) | Filling related migration (mg/kg)^{(*)} | Area related migration (mg/dm²) | Filling related migration (mg/kg)^{(*)} | Area related migration (mg/dm²) | Filling related migration (mg/kg)^{(*)} | Area related migration (mg/dm²) | Filling related migration (mg/kg)^{(*)} |
| E1 | PS sheet | 0.001 | 0.007 | < d.l. | < d.l. | 0.02 | 0.10 | 0.001 | 0.006 |
| E2 | PS sheet (annealed 48 h at 80 C) | < d.l. | < d.l. | < d.l. | < d.l. | 0.01 | 0.09 | 0.001 | 0.006 |
| E3 | PS-PLA 90-10 | < d.l. | < d.l. | < d.l. | < d.l. | 0.06 | 0.37 | 0.006 | 0.038 |
| E4 | PS-PLA 80-20 | < d.l. | < d.l. | < d.l. | < d.l. | 0.07 | 0.41 | 0.007 | 0.039 |
| E5 | PS-PLA max PLA throughput | < d.l. | < d.l. | < d.l. | < d.l. | 0.07 | 0.39 | 0.007 | 0.039 |
| E6 | PS-PLA 80-20 (annealed 48 h at 80 C) | < d.l. | < d.l. | < d.l. | < d.l. | 0.05 | 0.28 | 0.005 | 0.030 |
| Detection limit | | 0.001 | 0.005 | 0.0003 | 0.002 | 0.00014 | 0.0008 | 0.00014 | 0.0008 |

| | | | | | | | | | |
|---|---|---|---|---|---|---|---|---|---|
| d.l. : detection limit (*) applying a surface-to-volume ratio of 6 dm²/kg (EU cube model) | | | | | | | | | |

Using 3 % acetic acid (v/v) as food stimulant, styrene is only detected when a pure PS sheet is considered. Detected content is very close to the detection limit. When an annealing step has been imposed to the pure PS sheet or when a PLA layer is added, specific migration is always below the migration limit.

From these results, the presence of the additional PLA layer may be presented as beneficial in terms of styrene migration or at least not detrimental (if we take into account the detection limit, which is very close to the sole detected value).

The situation is different when 50 % of ethanol (v/v) is considered as food stimulant. Indeed, in this case, when comparing to the case of pure PS sheets, the specific migration of styrene and ethylbenzene are both higher when PS-PLA sheets are considered. This is nearly equally observed for all considered PS-PLA structures so there is no significant effect of the PLA layer thickness. Indeed, measurements clearly demonstrate the reverse effect as the evolution from a pure PS sheet to a PS-PLA bilayer induces an increase of the ethylbenzene specific migration.

When PS-PLA sheets are considered, from a specific migration point of view, it is thus preferable to put the polystyrene in contact with the yoghourt rather than the PLA layer.

Such choice is based on the current European legislation. Styrene is approved as a monomer according to regulation (EU) No 10/2011 (last amendment by regulation (EU) No 2015/174). Styrene is assigned as having no specific migration limit value because the migration of styrene into foods is self-limiting due to its sensory properties.

Consequently, a sensory analysis should be performed to evaluate the influence of styrene migration on the organoleptic properties of the packed food and compliance of styrene migration with EU legal requirements.
Styrene is produced predominately by ethylbenzene-based technology. Ethylbenzene belongs to the category of non-intentionally added substance. Migration of such substances must be in compliance with the safety requirements of article 3 of the European Framework Regulation (EC) No 1935/2004. This shall be assessed in accordance with internationally recognized scientific principles on risk assessment (article 19 of Regulation (EU) No 10/2011). In accordance with the functional barrier principle, non-evaluated substances should not be detected in a migration test at a detection limit of 10 ppb (10 µg/kg or 0.01 mg/kg).
The scientific committee on food established a restriction for ethylbenzene of 0.01 mg/kg body weight (b.w.), based on allowing 1/10 of the tolerable daily intake value (TDI = 0.1 mg/kg b.w.) for food packaging uses. Based on the assumption of bodyweight of 60 kg and that 1 kg of the food is packaged in a cubic container of 6 dm² surface area releasing the substance, the filling related migration limit is 0.6 mg/kg food, and the respective area-related migration limit is 0.1 mg/dm².

### Example 4 : sagging

The PS-PLA sheets produced in example 1 were thermoformed and compared with the thermoforming behaviour of pure PS (HIPS 7240) sheets.

Ranking for sagging behaviour was determined by comparison of the distance from the punch in mm as determined at a heating time of 15 seconds. The higher the distance from the punch the lower is the sagging.The results are reported in the below table 3.

**Table 3: Sagging behaviour on three compositions**

| | Composition 1 (reference) | Composition 2 | Composition 3 |
|---|---|---|---|
| PS (wt.%) | 100 | 90 | 80 |
| PLA (wt.%) | 0 | 10 | 20 |
| Heating time (s) | 15 | 15 | 15 |
| Pressure (N) | 819 | 819 | 819 |
| Distance from the punch (mm) | 36.4 | 39.3 | 39.1 |
| Average temperature (°C) | 121.2 | 124.2 | 120.0 |

From the results it can be seen that the sagging is lowered in the blends PS-PLA by comparison with the pure PS.

## Claims

1. Packaging for food comprising a multilayered product selected from a sheet, a plate, a film and an article **characterized in that** the multilayer product has a multilayered structure comprising:
i. one or more layers A of a first polymer composition, wherein the first polymer composition comprises at least one biopolymer comprising or being a polylactic acid having a melt index ranging from 5.0 to 25.0 g/10 min as determined at 210 °C under a load of 2.16 kg according to ASTM D1238; and
ii. one or more layers B of a second polymer composition, wherein the second polymer composition comprises polystyrene selected from general purpose polystyrene , modified-polystyrene and any mixture thereof;
**in that** the total thickness of the one or more layers A of the first polymer composition is ranging from 5 to 25 % of the total thickness of the multilayered product, and **in that** weight ratio of the second polymer composition to the first polymer composition in the multilayered product is ranging from 95:5 to 80:20 as based on the total weight of the multilayered product.

2. The packaging according to claim 1, **characterized in that** the first polymer composition of one or more layers A further comprises:
- at least one recycled polymer being recycled polyethylene terephthalate ; and/or
- polystyrene being selected from general purpose polystyrene, modified-polystyrene and any mixture thereof, preferably the modified-polystyrene is high impact polystyrene.

3. The packaging according to claim 1 or 2, **characterized in that** the at least one biopolymer of the first polymer composition comprises polylactic acid, and one or more selected from poly-3-hydroxybutyrate, polyhydroxyvalerate, polyhydroxyalkanoate, polyhydroxyhexanoate, polyhydroxyoctanoate and their copolymers and any mixture thereof.

4. The packaging according to any one of claims 1 to 3, **characterized in that** the polylactic acid is selected from poly-L-lactide acid, poly-D-lactide acid, copolymer of poly-L-lactide acid with D-lactide acid units, poly-L-lactide acid - poly-D-lactide acid stereo complex and any mixture thereof, more preferably the polylactic acid is selected from poly-L-lactide acid , copolymer of poly-L-lactide acid with D-lactide acid units, and any mixture thereof.

5. The packaging according to any one of claims 1 to 4, **characterized in that** the polylactic acid is a copolymer of poly-L-lactide acid with D-lactide acid units wherein the D-lactide acid units content is ranging from 0.1 to 15.0 wt.% as based on the total weight of the polylactic acid (PLA), preferably is ranging from 1.0 to 8.0 wt.%, more preferably is ranging from 3.0 to 6.0 wt.%, the D-lactide acid units content being determined using the enzymatic method.

6. The packaging according to any one of claims 1 to 5, **characterized in that** the polylactic acid has a melt index ranging from 6.0 to 20.0 g/10 min, preferably ranging from 7.0 to 15.0 g/10 min, more preferably ranging from 8.0 to 12.0 g/10 min, as determined at 210 °C under a load of 2.16 kg according to ASTM D1238.

7. The packaging according to any one of claims 1 to 6, **characterized in that** the second polymer composition of one or more layers B comprises or is high impact polystyrene , preferably the second polymer composition of at least one of the layers B comprises a blend of high impact polystyrene and general purpose polystyrene wherein the content of high impact polystyrene is ranging from 30 to 70 wt.% as based on the total weight of the blend.

8. The packaging according to any one of claims 1 to 7, **characterized in that**
- the total thickness of the one or more layers A of the first polymer composition is ranging from 5 to 20 % of the total thickness of the multilayered product; and/or
- the weight ratio of the second polymer composition to the first polymer composition in the multilayered product is ranging from 90:10 to 85:15 as based on the total weight of the multilayered product.

9. The packaging according to any one of claims 1 to 8, **characterized in that** multilayered product:
- comprises two layers, or
- comprises three layers or more wherein two of the layers are surface layers, and **in that** at least one of the surface layers is a layer B of the second polymer composition.

10. The packaging according to any one of claims 1 to 8, **characterized in that** the multilayered product is a sheet or a plate for thermoforming comprising two surface layers, wherein the layer intended to be in contact with food is a layer B of the second polymer composition; preferably, the multilayered product comprises three layers or more and both surface layers are layer B of the second polymer composition.

11. The packaging according to any one of claims 1 to 10, **characterized in that** the multilayered product is a sheet or a plate for thermoforming, and the second polymer composition of one or more layers B has an MFI ranging from 1.0 to 10.0 g/10 min as determined according to ISO 1133-2011 at 200 °C under a load of 5 kg, preferably ranging from 2.0 to 8.0 g/10 min.

12. The packaging according to any one of claims 1 to 8, **characterized in that** the multilayered product is an article comprising two layers or more wherein two layers are surface layers being an inner layer and an outer layer, wherein the inner layer is the one intended to be in contact with food, and is a layer B of the second polymer composition; preferably the multilayered product comprises three layers or more and both the inner and the outer layer are layer B of the second polymer composition.

13. Thermoformable sheet or thermoformable plate for the production of a packaging for food according to any one of claims 1 to 12; **characterized in that** it comprises a multilayered structure comprising:
i. one or more layers A of a first polymer composition, wherein the first polymer composition comprises at least one biopolymer comprising or being a polylactic acid having a melt index ranging from 5.0 to 25.0 g / 10 min as determined at 210 °C under a load of 2.16 kg in accordance with ASTM D1238; and
ii. one or more layers B of a second polymer composition, wherein the second polymer composition comprises polystyrene selected from general purpose polystyrene, modified-polystyrene and any mixture thereof;
and **in that** the total thickness of the one or more layers A of the first polymer composition is ranging from 5 to 25 % of the total thickness of the multilayered product, and **in that** the weight ratio of the second polymer composition to the first polymer composition in the multilayered product is ranging from 95:5 to 80:20 as based on the total weight of the multilayered product.

14. Process to produce a thermoformed article wherein the process comprises the steps of:
a. providing a thermoformable sheet or a thermoformable plate according to claim 13,
b. thermoforming the thermoformable sheet or plate into a thermoformed article.

15. Use, as packaging for food, of a multilayered product selected from a sheet, a plate, a film and an article **characterized in that** the multilayer product has a multilayered structure comprising:
i. one or more layers A of a first polymer composition, wherein the first polymer composition comprises at least one biopolymer comprising or being a polylactic acid having a melt index ranging from 5.0 to 25.0 g / 10 min as determined at 210 °C under a load of 2.16 kg in accordance with ASTM D1238; and
ii. one or more layers B of a second polymer composition, wherein the second polymer composition comprises polystyrene selected from general purpose polystyrene, modified-polystyrene and any mixture thereof;
**in that** the total thickness of the one or more layers A of the first polymer composition is ranging from 5 to 25 % of the total thickness of the multilayered product, and **in that** the weight ratio of the second polymer composition to the first polymer composition in the multilayered product is ranging from 95:5 to 80:20 as based on the total weight of the multilayered product.

16. Article having a multilayered structure **characterized in that** it comprises:
i. one or more layers A of a first polymer composition, wherein the first polymer composition comprises at least one biopolymer comprising or being a polylactic acid having a melt index ranging from 5.0 to 25.0 g/10 min as determined at 210 °C under a load of 2.16 kg in accordance with ASTM D1238; and
ii. one or more layers B of a second polymer composition, wherein the second polymer composition comprises polystyrene selected from general purpose polystyrene, modified-polystyrene and any mixture thereof;
**in that** the total thickness of the one or more layers A of the first polymer composition is ranging from 5 to 25 % of the total thickness of the multilayered product;
**in that** the weight ratio of the second polymer composition to the first polymer composition in the multilayered product is ranging from 95:5 to 80:20 as based on the total weight of the multilayered product;
and **in that** the article is selected from a thermoformed article, an injection moulded article, a rotomoulded article, a blow moulded article and a film, preferably the film is selected from a blown film and a cast film.
